# EUROPÄISCHE PATENTANMELDUNG

(11) **EP 1 967 962 A1**
(43) Veröffentlichungstag der Anmeldung: **10.09.2008**
(21) Anmeldenummer: 08002507.5
(22) Anmeldetag: 12.02.2008
(51) Int. Cl.: G06F 17/24, G06F 3/03, G06K 7/10

(54) **Verfahren zur Zuordnung von externen Informationen zu einem Formular-Datensatz**

(30) Priorität: 08.03.2007 DE 102007011577
(71) Anmelder: SRS-Management GmbH, 64625 Bensheim (DE)
(72) Erfinder: Strauß, Thomas, 60385 Frankfurt am Main (DE); Homilius, Detlev, 64625 Bensheim (DE)
(74) Vertreter: Katscher Habermann Patentanwälte

(57) **Zusammenfassung**

Bei einem Verfahren zur Zuordnung von externen Informationen zu einem Formulardatensatz, der mit einem Digital Pen auf einem vorgegebenen Formular elektronisch erfasst wird, wobei die externen Informationen elektronisch erfasst werden und die mit dem Digital Pen erfassten Formulardaten und die elektronisch erfassten externen Informationen an eine elektronische Datenverarbeitungsanlage (5) übermittelt und anschließend ausgewertet werden, werden eine formularspezifische Auslösezeitinformation abgerufen und die externen Informationen mit einem eindeutig identifizierbaren elektronischen Lesegerät erfasst und in Verbindung mit einer zeitlichen Einordnung relativ zu der Auslösezeitinformation an die elektronische Datenverarbeitungsanlage (5) übermittelt. Auf dem Formular sind ein oder mehrere Startfelder vorgesehen, so dass die Auslösezeitinformation bei einem erstmaligen Schreiben mit dem Digital Pen in dem zugeordneten Startfeld abgerufen wird. Der Auslösezeitinformation wird eine Informationseinlesedauer zugeordnet, innerhalb der elektronisch erfasste externe Informationen akzeptiert und zugeordnet werden und außerhalb der elektronisch erfasste externe Informationen verworfen werden.

## Beschreibung

Die Erfindung betrifft ein Verfahren zur Zuordnung von externen Informationen zu einem Formular-Datensatz, der mit einem Digital Pen auf einem vorgegebenen Formular elektronisch erfasst wird, wobei die externen Informationen elektronisch erfasst werden und die mit dem Digital Pen erfassten Formulardaten und die elektronisch erfassten externen Informationen an eine elektronische Datenverarbeitungsanlage übermittelt und anschließend ausgewertet werden.

Als Digital Pens werden beispielsweise von dem schwedischen Unternehmen Anoto Group AB entwickelte Kugelschreiber bezeichnet, die neben einer Kugelschreibermine eine zusätzliche Digitalkamera zum Filmen der Papieroberflache aufweisen, über die sich der Kugelschreiber beim Schreiben bewegt. Wird mit dem Digital Pen auf einem Spezialpapier mit einem für das menschliche Auge fast unsichtbaren Muster geschrieben, so kann die in dem Kugelschreiber integrierte Digitalkamera die mit dem Kugelschreiber erzeugten handschriftlichen Notizen auf dem Spezialpapier erfassen. Die handschriftlichen Notizen werden dann in Vektorgrafiken umgesetzt, die beispielsweise mit bekannten Handschrifterkennungsverfahren ausgewertet und in digitale Textinformationen überführt werden können. Der Digital Pen besitzt eine Zeitstempelfunktion, so dass nicht nur die handschriftlichen Notizen elektronisch erfasst werden können, sondern auch jeder einzelne Erfassungsvorgang zeitlich bestimmt und eingeordnet werden kann. Zu diesem Zweck wird bei einer Handschrifterfassung die aktuelle Zeitinformation abgerufen und zusammen mit den elektronisch erfassten Handschriftinformationen abgespeichert, bzw. zur weiteren Auswertung an eine elektronische Datenverarbeitungsanlage übermittelt.

Solche aus der Praxis bekannten Digital Pens eignen sich in Verbindung mit dem vorangehend beschriebenen Spezialpapier, welches zweckmäßigerweise in Form eines Formulars gestaltet ist, für die schnelle Erfassung und elektronische Übertragung von einer großen Anzahl gleich strukturierter Formulardaten. Die Datenerfassung mit Digital Pens wird beispielsweise bereits erfolgreich in Krankenhäusern verwendet, wobei täglich Patienteninformationen auf einem Patienten bezogenen Formular mit dem Digital Pen erfasst und nahezu zeitgleich in eine zentrale elektronische Datenbank überführt werden, um von dort aus bei Bedarf abgerufen werden zu können.

Oftmals ist es wünschenswert, wenn zusätzlich zu den Formulardaten, die in die vorgegebenen Formulare eingetragen und dabei erfasst werden können, weitere externe Informationen erfasst und dem aktuell bearbeiteten Formular-Datensatz zugeordnet werden könnten. So könnte beispielsweise der behandelnde Arzt auf seinem patientenspezifischen Formular die Uhrzeit und das Ergebnis seiner täglichen Visite des betreffenden Patienten vermerken und gleichzeitig externe Informationen in Form der Bezeichnung und Dosierung der dem Patienten verabreichten Medikamente beispielsweise mittels eines Scanners oder Barcode-Lesegerätes erfassen, um diese Informationen nicht handschriftlich wiederholen und auf dem Formular vermerken zu müssen.

Aus der Praxis ist es bekannt, einen Digital Pen mit einer zusätzlichen Barcode-Leseeinrichtung auszustatten. Der modifizierte Digital Pen kann dann wahlweise entweder zur elektronischen Erfassung der handschriftlich auf dem Formular vermerkten Formulardaten oder aber zur elektronischen Erfassung eines externen Barcodes verwendet werden.

Der in einem Digital Pen für einen Barcode-Leser zur Verfügung stehende Raum ist äußerst klein, so dass die bekannten Barcode-Lesegeräte in einem Digital Pen den Barcode mit Infrarot-Licht und nicht mit einem Laserstrahl abtasten müssen. Aus diesem Grund können nur Barcodes ab einer bestimmten Größe erkannt und zuverlässig ausgewertet werden. Zudem müssen die Farbgebung, beziehungsweise der Kontrast des Barcodes sowie eine mögliche Hintergrundgestaltung des Barcodes Miridestänforderungen erfüllen, um ein zuverlässiges Erfassen der abgetasteten Barcodes zu ermöglichen.

Da das Barcode-Lesegerät in dem Digital Pen üblicherweise über die Stiftspitze, beziehungsweise durch einen auf die Stiftspitze ausgeübten Druck aktiviert wird, wird der Barcode während der Erfassung mit einem sichtbaren Strich in Leserichtung versehen. Ein Durchstreichen oder sichtbares Markieren des Barcodes wird oftmals nicht gewünscht und gleichzeitig ein mehrmaliges Erfassen desselben Barcodes mit einem Digital Pen erschwert, beziehungsweise ab einer gewissen Anzahl von Lesevorgängen unmöglich gemacht.

Wird zur Erfassung externer Informationen ein gesonderter Scanner oder ein externes, nicht in dem Digital Pen integriertes Barcode-Lesegerät verwendet, so fehlt eine eindeutige Zuordnung der auf diese Weise erfassten externen Informationen zu dem jeweiligen Formular-Datensatz, der mit dem Digital Pen elektronisch bearbeitet und erfasst wird.

Aufgabe der folgenden Erfindung ist es demzufolge, ein Verfahren der eingangs genannten Gattung so auszugestalten, dass auf einfache Weise eine zuverlässige Zuordnung von externen Informationen zu einem Formular-Datensatz ermöglich wird, der mit einem Digital Pen auf einem vorgegebenen Formular elektronisch erfasst wird.

Diese Aufgabe wird erfindungsgemäß dadurch gelöst, dass eine formularspezifische Auslösezeitinformation abgerufen wird und die externen Informationen mit einem eindeutig identifizierbaren elektronischen Lesegerät erfasst und in Verbindung mit einer zeitlichen Einordnung relativ zu der Auslösezeitinformation an die elektronische Datenverarbeitungsanlage übermittelt werden.

Die Auslösezeitinformation ist beispielsweise die genaue Zeit, zu der auf dem vorgegebenen Formular das erste Formulardatum mit dem Digital Pen elektronisch erfasst wird. In diesem Fall fällt die Auslösezeitinformation zeitlich mit dem ersten handschriftlichen Vermerk auf dem Formular zusammen. Alle zeitlich nachfolgend erfassten externen Informationen werden dann dem betreffenden Formular zugeordnet.

Indem das Formular mit einem individuellen, eindeutig identifizierbaren winzigen Punktmuster, einem so genannten Unique-Pattern, versehen wird, kann im Rahmen der Auswertung ermittelt und überprüft werden, ob die anschließend elektronisch erfassten Formulardaten mit dem Digital Pen auf dem betreffenden Formular oder aber einem anderen Formular erzeugt, beziehungsweise vermerkt wurden. Sobald beispielsweise das Formular gewechselt und mit dem Digital Pen auf einem anderen Formular Formulardaten vermerkt und erfasst werden, wird eine neue, dem neuen Formular zugeordnete Auslösezeitinformation abgerufen, beziehungsweise gespeichert und an die elektronische Datenverarbeitung übermittelt, so dass zeitlich danach elektronisch erfasste externe Informationen dem zweiten Formular und nicht mehr dem ersten Formular zugeordnet werden.

Vorzugsweise ist vorgesehen, dass auf dem Formular ein Startfeld vorgesehen ist und die Auslösezeitinformation beim erstmaligen Schreiben mit dem Digital Pen in dem Startfeld abgerufen wird. In diesem Fall wird die Zuordnung von elektronisch erfassten externen Informationen zu einem Formular-Datensatz erst dann aktiviert und ermöglicht, wenn mit dem Digital Pen das Startfeld berührt, beziehungsweise gekennzeichnet wird. Dies kann zeitlich später, bzw. unabhängig von einem ersten Vermerk außerhalb des Startfeldes auf diesem Formular erfolgen.

Einer vorteilhaften Ausgestaltung des Erfindungsgedankens zufolge ist vorgesehen, dass mehrere Auslösezeitinformationen jeweils einzelnen Formularfeldern zugeordnet werden. So können beispielsweise drei verschiedene Formularfelder mit drei externen Informationen versehen werden, ohne dass es auf die Reihenfolge der elektronischen Erfassung der externen Informationen ankäme. Indem der Benutzer mit dem Digital Pen die dem jeweiligen Formularfeld zugeordnete Auslösezeitinformation abruft und damit speichert, beziehungsweise das betreffende Formularfeld aktiviert, kann im Rahmen der anschließenden Auswertung in der elektronischen Datenverarbeitungsanlage sichergestellt werden, dass die zeitlich nach der Aktivierung des betreffenden Formularfeldes elektronisch erfasste externe Information diesem Formularfeld zugeordnet wird.

Um eine eindeutige Zuordnung von elektronisch erfassten externen Informationen zu einem Formular-Datensatz, beziehungsweise zu einzelnen Formularfeldern des Formular-Datensatzes zu erleichtern und die Fehlersicherheit zu erhöhen ist vorgesehen, dass einer Auslösezeitinformation eine Informationseinlesedauer zugeordnet wird, innerhalb der elektronisch erfasste externe Informationen akzeptiert und zugeordnet werden und außerhalb der elektronisch erfasste Informationen verworfen werden. So könnte beispielsweise vorgesehen sein, dass nach dem Abrufen, beziehungsweise Aktivieren einer Auslösezeitinformation nachfolgend elektronisch erfasste externe Informationen nur dann akzeptiert und dem betreffenden Formular-Datensatz, beziehungsweise dem betreffenden Formularfeld zugeordnet werden, wenn die externen Informationen innerhalb von fünf Sekunden elektronisch erfasst werden. Natürlich kann statt fünf Sekunden eine ganz allgemein beliebig vorwählbare Zeitdauer für die anschließende elektronische Erfassung von externen Informationen vorgesehen sein. Durch die enge zeitliche Korrelation von dem Abrufen der Auslösezeitinformation auf dem Formular und dem elektronischen Erfassen von externen Informationen kann sichergestellt werden, dass fehlerhafte Zuordnungen beispielsweise in Folge eines unbeabsichtigten Auslösens der elektronischen Erfassung externer Informationen oder aber entsprechend unbeabsichtigter Vermerke mit dem Digital Pen auf dem Formular unberücksichtigt bleiben.

Eine besonders zuverlässige Zuordnung der externen Informationen wird ermöglicht, indem die Informationseinlesedauer durch das Abrufen einer Stoppzeitinformation begrenzt wird. Die Stoppzeitinformation kann beispielsweise durch das Beschreiben oder Ankreuzen eines gesonderten Stoppfeldes abgerufen, beziehungsweise erzeugt und abgespeichert werden. Nur diejenigen externen Informationen, die nach dem Abrufen der Auslösezeitiriförmation und vor dem Abrufen der zugeordneten Stoppzeitinformation elektronisch erfasst werden, werden auch dem betreffenden Formular-Datensatz oder demjenigen Formularfeld zugeordnet, welches seinerseits der abgerufenen Auslösezeitinformation, beziehungsweise Stoppzeitinformation zugeordnet ist. Auf diese Weise können auch mehrere externe Informationen einem einzigen Formularfeld zugeordnet werden. Ein wiederholtes Abrufen der zugeordneten Auslösezeitinformation wäre in diesem Fall nicht notwendig.

In besonders vorteilhafter Weise ist vorgesehen, dass die externen Informationen mittels eines Barcode-Lesegeräts erfasst werden. Geeignete Barcodes können alle bekannten Barcodes und Barcode-ähnliche elektronisch erfassbaren Codes sein, insbesondere auch zweidimensionale Matrixcodes oder gerasterte Abbildungen. Ein geeignetes Barcode-Lesegerät muss eine Zeitstempelfunktion aufweisen, die zweckmäßigerweise mit dem Digital Pen, beziehungsweise der elektronischen Datenverarbeitungsanlage synchronisiert ist. Das Barcode-Lesegerät sollte darüber hinaus einen ausreichend großen Speicher aufweisen, um eine einfache Handhabung zu ermöglichen und eine ausreichend große Anzahl erfasster Barcode-Informationen abspeichern zu können, bevor die abgespeicherten Barcode-Informationen an die elektronische Datenverarbeitungsanlage übermittelt werden müssen.

Aufgrund Ihrer weiten Verbreitung und den in der Praxis bewährten Verfahren zur Erzeugung, beziehungsweise zur Erfassung von Barcode-Informationen sind Barcodes in besonderer Weise dazu geeignet, um externe Informationen sowohl zu hinterlegen als auch einfach und schnell elektronisch zu erfassen. Geeignet Barcode-Lesegeräte sind handelsüblich und können kostengünstig erworben und betrieben werden. Für die Übermittlung und Erfassung von sensiblen, sicherheitsrelevanten oder beispielsweise Patienten bezogenen Informationen sind Barcodes bekannt, die eine umfassende Fehlerüberprüfung und Fehlerkorrekturmöglichkeit aufweisen, so dass eine fehlerhafte Erfassung oder Zuordnung der in dem Barcode codierten Informationen nahezu ausgeschlossen werden kann.

Einer vorteilhaften Ausgestaltung des Erfindungsgedankens zufolge ist vorgesehen, dass die Auslösezeitinformation dadurch abgerufen wird, dass mit dem elektronischen Barcode-Lesegerät ein Barcode eingelesen wird, der vor Beginn der elektronischen Erfassung durch den Digital Pen auf dem Formular angebracht wurde. Ein entsprechender Barcode kann in einfacher Weise entweder zum Zeitpunkt der Erzeugung, beziehungsweise des Ausdrucks des Formulars oder aber nachträglich auf dem Formular angebracht werden. Auch kann die Stoppzeitinformation dadurch abgerufen werden, dass mit dem elektronischen Barcode-Lesegerät ein Barcode eingelesen wird, der vor Beginn der elektronischen Erfassung durch den Digital Pen auf dem Formular angebracht wurde.

Ebenfalls ist es denkbar, dass ein das Formular individualisierender Barcode auf dem Formular angebracht wird. Durch Einlesen des individualisierenden Barcodes kann ein ansonsten nicht unterscheidbares Formular im Rahmen der anschließenden Auswertung individualisiert werden. Die Verwendung eines Unique-Pätterns wäre in diesem Fall nicht mehr erforderlich.

Insbesondere bei der Verwendung von Barcodes kann es zweckmäßig sein, dass die externe Information eine vorgegebene Feldzuordnungsinformation und eine frei wählbare Inhaltsinformation umfasst und die mit dem Barcode-Lesegerät erfasst Feldzuordnungsinformation eine nachträgliche eindeutige Zuordnung der erfassten Inhaltsinformation zu einem Formularfeld ermöglicht. Bei einer bekannten Struktur des Formular-Datensatzes kann ein dem Formular-Datensatz zugeordneter Barcode anhand der in dem elektronisch erfassten Barcode enthaltenen Feldzuordnungsinformation eindeutig einem vorgegebenen Feld in dem Formular-Datensatz zugewiesen werden. Eine gesonderte Zuordnung der einzelnen elektronisch erfassten Barcodes zu verschiedenen Feldern eines Formular-Datensatzes mittels verschiedener Auslösezeitinformationen ist in diesem Fall überflüssig, da eine eindeutige Zuordnung der Barcode-Informationen bereits anhand der in den jeweiligen Barcodes enthaltenen Feldzuordnungsinformationen erfolgen kann, sofern nur der elektronisch erfasste Barcode eindeutig dem betreffenden Formular-Datensatz zugeordnet werden kann.

Nachfolgend werden Ausführungsbeispiele des Erfindungsgedankens näher erläutert, die in der Zeichnung dargestellt sind. Es zeigt:
Figur 1 einen schematischen Ablauf eines Verfahrens zur Zuordnung von externen Informationen zu einem Formular-Datensatz, der mit einem Digital Pen auf einem vorgegebenen Formular elektronisch erfasst wird,
Figur 2 eine schematische Darstellung der zeitlichen Abfolge der elektronischen Erfassung von Formulardaten mit dem Digital Pen, beziehungsweise von externen Informationen mit einem elektrischen Lesegerät,
Figur 3 einen schematischen Ablauf der Auswertung der mit dem Digital Pen, beziehungsweise dem elektronischen Lesegerät erfassten und an eine elektronische Datenverarbeitungsanlage übermittelten Formulardaten, beziehungsweise externen Informationen und
Figur 4 eine exemplarische Darstellung einer Datentabelle für einen Formular-Datensatz mit zugeordneten externen Informationen.

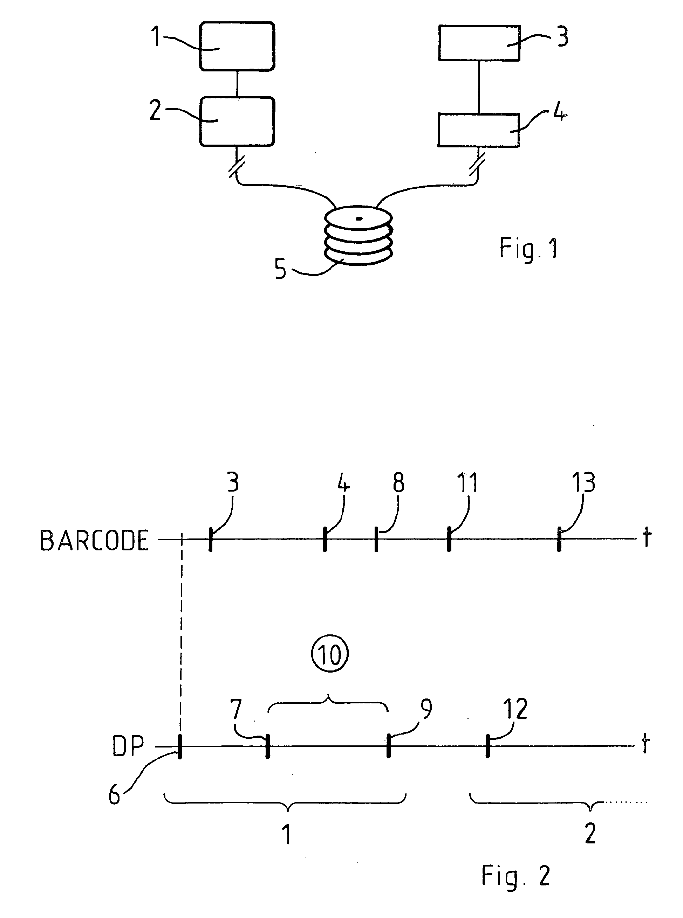

In Figur 1 wird schematisch veranschaulicht, wie mit einem nicht dargestellten Digital Pen nacheinander ein erster Formular-Datensatz 1 und ein zweiter Formular-Datensatz 2 erfasst werden. Unabhängig davon können mit einem separaten Barcode-Lesegerät, welches ebenfalls nicht dargestellt ist, externe Informationen in Form von Barcodes 3, 4 erfasst werden.

Die jeweils elektronisch erfassten Formular-Datensätze 1, 2 und Barcodes 3, 4 werden nach einem gegebenenfalls längeren Erfassungszeitraum, beispielsweise spätestens am Ende eines Arbeitstages, an eine elektronische Datenverarbeitungsanlage 5 übermittelt, um dort ausgewertet zu werden. Es ist ebenfalls denkbar und in vielerlei Hinsicht vorteilhaft, wenn jede einzelne elektronische Erfassung von Formular-Datensätzen 1, 2 mit dem Digital Pen, beziehungsweise von externen Barcodes 3, 4 mit dem separaten Barcode-Lesegerät jeweils unmittelbar nach Abschluss des jeweiligen elektronischen Erfassungsvorgangs vorzugsweise drahtlos an die elektronische Datenverarbeitungsanlage 5 übermittelt werden, um zeitnah einer Auswertung zugeführt zu werden.

Die jeweils elektronisch erfassten Formular-Datensätze 1, 2, beziehungsweise externen Informationen in Form der Barcodes 3, 4 sind jeweils mit einem untereinander synchronisierten Zeitstempel versehen, so dass eine zeitliche Abfolge der elektronischen Erfassungsvorgänge ermittelt und ausgewertet werden kann, wie sie beispielsweise in Figur 2 exemplarisch dargestellt ist.

Durch einen ersten handschriftlichen Vermerk mit dem Digital Pen (DP) auf einem nicht dargestellten ersten Formular wird der erste Formular-Datensatz 1 ausgewählt und gleichzeitig eine erste Auslösezeitinformation 6 abgerufen, beziehungsweise an die elektronische Datenverarbeitungsanlage 5 übermittelt. Der kurze Zeit später elektronisch erfasste Barcode 3 wird automatisch dem ersten Formular-Datensatz 1 zugeordnet.

Durch das Ankreuzen eines Startfeldes wird eine zweite Auslösezeitinformation 7 abgerufen, die einem bestimmten Formularfeld zugeordnet ist. Die beiden nachfolgend elektronisch erfassten Barcodes 4, 8 werden beide dem betreffenden Formularfeld zugeordnet, da erst im Anschluss daran durch den Digital Pen ein zugeordnetes Stoppfeld markiert und eine entsprechend zugeordnete Stoppzeitinformation 9 abgerufen wird. Da die beiden Barcodes 4, 8 innerhalb der durch die Auslösezeitinformation 7 und die Stoppzeitinformation 9 definierte Informationseinlesedauer 10 elektronisch erfasst wurden können beide Barcodes 4, 8 eindeutig dem betreffenden Formularfeld zugeordnet werden.

Der im Anschluss daran nach dem Abrufen der Stoppzeitinformation 9 elektronisch erfasste Barcode 11 wird im Rahmen der nachfolgenden Auswertung mit der elektronischen Datenverarbeitungsanlage verworfen, da er in Ermangelung einer vorausgegangenen und noch aktiven, bzw. noch nicht beendeten Auslösezeitinformation nicht eindeutig einem Formularfeld, beziehungsweise dem ersten Formular-Datensatz 1 zugeordnet werden kann.

Mit dem Abrufen einer erneuten Auslösezeitinformation 12 auf einem zweiten Formular wird die Erfassung, beziehungsweise Bearbeitung des zweiten Formular-Datensatzes 2 begonnen. Ein nachfolgend eingelesener Barcode 13 wird bereits dem zweiten Formular-Datensatz 2 zugeordnet.

Eine vorausgehend beschriebene Auswertung der mit dem Digital Pen erfassten Formulardaten, beziehungsweise der mit dem Barcode-Lesegerät erfassten Barcodes 3, 4, 6, 11, 13 setzt eine eindeutige Identifizierung sowohl des Formulars beispielsweise durch ein geeignetes Unique-Pattern sowie ein eindeutig identifizierbares Barcode-Lesegerät voraus, so dass die in einer zentralen elektronischen Datenverarbeitungsanlage 5 ankommenden Informationen von verschiedenen Digital Pens, beziehungsweise Barcode-Lesegeräten unterschieden und den jeweiligen Benutzern, beziehungsweise den jeweiligen Formular-Datensätzen 1, 2 zugeordnet werden können. Auch ist eine in den Digital Pens, beziehungsweise in den Barcode-Lesegeräten implementierte Zeitstempelfunktion erforderlich, beziehungsweise zweckmäßig, die vorzugsweise mit einer entsprechenden Zeitinformation der elektronischen Datenverarbeitungsanlage 5 synchronisiert sein sollte.

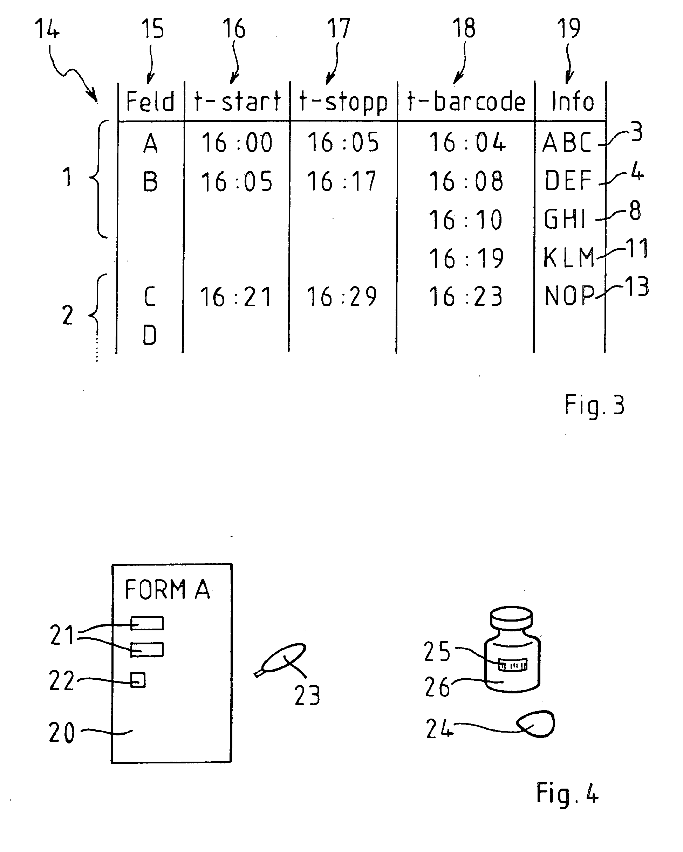

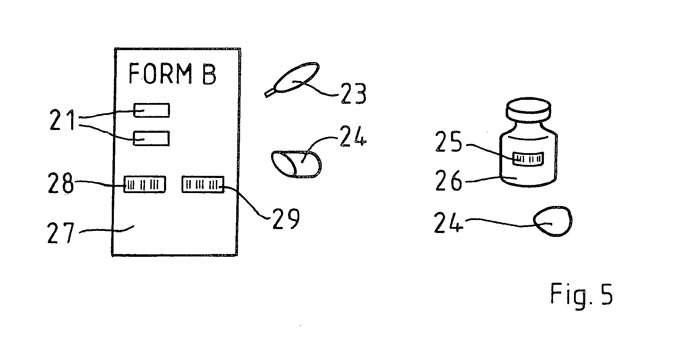

In Figur 3 ist schematisch die Auswertung der elektronisch erfassten Informationen in der elektronischen Datenverarbeitungsanlage 5 dargestellt. In einem ersten Verfahrensschritt 14 wird die erste Auslösezeitinformation 6 ermittelt. In einem nachfolgenden zweiten Verfahrensschritt 15 wird eine zugeordnete Stoppzeitinformation ermittelt, die im beschriebenen Ausführungsbeispiel identisch der zweiten Auslösezeitinformation 7 entspricht. In einem dritten Verfahrensschritt 16 wird der zeitlich nächste nachfolgend erfasste Barcode 3 ermittelt, der als externe Information dem Formular-Datensatz 1 zugeordnet werden soll. In einem nachfolgenden Verfahrensschritt 17 wird überprüft, ob die elektronische Erfassung des Barcodes 3 zeitlich in die Informationseinlesedauer fällt, die durch die Auslösezeitinformation 6 und die Stoppzeitinformation, die identisch der Auslösezeitinformation 7 entspricht, fällt. Da dies der Fall ist, wird im sich anschließenden fünften Verfahrensschritt 18 der Barcode 3 dem Formular-Datensatz 1 zugeordnet. Anschließend wird in einem sechsten Verfahrensschritt 19 überprüft, ob der zeitlich nachfolgend erfasste nächste Barcode 4 ebenfalls in die Informationseinlesedauer fällt. Da dies nicht der Fall ist wird das Auswerteverfahren mit der Ermittlung der nächsten Auslösezeitinformation fortgesetzt. Würde ein weiterer Barcode ermittelt werden, der möglicherweise innerhalb der Informationseinlassdauer elektronisch erfasst worden wäre, so würde der betreffende Barcode ausgewertet und in dem dann ausgeführten Verfahrensschritt 17 überprüft werden, ob der betreffende Barcode eindeutig dem derzeit bearbeiteten Formular-Datensatz 1 zugeordnet werden könnte.

Durch die Auswertung sämtlicher mit dem Digital Pen elektronisch erfasster Formulardaten sowie sämtlicher mit dem Barcode-Lesegerät erfassten Barcodes 3, 4, 8, 11, 13 wird sukzessiv eine Datentabelle 20 für den Formular-Datensatz 1 erstellt, wie sie schematisch in Figur 4 dargestellt ist. Die einzelnen Formularfelder (Feld) sind in einer ersten Spalte 21 aufgelistet. Zu jedem Formularfeld wird in einer weiteren Spalte 22 die zugeordnete Auslösezeitinformation (t-start) sowie in einer weiteren Spalte 23 die zugeordnete Stoppzeitinformation (t-stopp) vermerkt. Der Zeitpunkt t-barcode der elektronischen Erfassung der Barcodes 3, 4, 8, 11 und 13 ist in einer weiteren Spalte 24 wiedergegeben. Die den einzelnen Barcodes 3, 4, 8, 11, 13 zugeordneten Informationen (Info) sind schematisch in einer letzten Spalte 25 abgebildet.

Mit dem vorangehend beschriebenen Auswerteschema können die einzelnen Barcodeinformationen der Barcodes 3, 4, 8, 11 und 13 nicht nur den betreffenden Formular-Datensätzen 1, 2 zugeordnet werden, sondern auch in eindeutiger Weise den jeweiligen Formularfeldern zugeordnet werden, die gemäß einer vorgegebenen Datenstruktur den Formular-Datensätzen 1, 2 zugeordnet sind.

## Patentansprüche

1. Verfahren zur Zuordnung von externen Informationen zu einem Formulardatensatz, der mit einem Digital Pen auf einem vorgegebenen Formular elektronisch erfasst wird, wobei die externen Informationen elektronisch erfasst werden und die mit dem Digital Pen erfassten Formulardaten und die elektronisch erfassten externen Informationen an eine elektronische Datenverarbeitungsanlage übermittelt und anschließend ausgewertet werden, **dadurch gekennzeichnet, dass** eine formularspezifische Auslösezeitinformation (6, 7, 12) abgerufen wird und die externen Informationen mit einem eindeutig identifizierbaren elektronischen Lesegerät erfasst und in Verbindung mit einer zeitlichen Einordnung relativ zu der Auslösezeitinformation (6, 7, 12) an die elektronische Datenverarbeitungsanlage (5) übermittelt werden.

2. Verfahren nach Anspruch 1, **dadurch gekennzeichnet, dass** auf dem Formular ein Startfeld vorgesehen ist und die Auslösezeitinformation (6, 7, 12) bei einem erstmaligen Schreiben mit dem Digital Pen in dem Startfeld abgerufen wird.

3. Verfahren nach Anspruch 1 und Anspruch 2, **dadurch gekennzeichnet, dass** mehrere formularspezifische Auslösezeitinformationen (6, 7, 12) abgerufen werden, die jeweils einzelnen Formularfeldern zugeordnet sind.

4. Verfahren nach einem der vorangehenden Ansprüche, **dadurch gekennzeichnet, dass** einer Auslösezeitinformation (6, 7, 12) eine Informationseinlesedauer (10) zugeordnet wird, innerhalb der elektronisch erfasste externe Informationen akzeptiert und zugeordnet werden und außerhalb der elektronisch erfasste externe Informationen verworfen werden.

5. Verfahren nach Anspruch 4, **dadurch gekennzeichnet, dass** die Informationseinlesedauer (10) durch das Abrufen einer Stoppzeitinformation (9) begrenzt wird.

6. Verfahren nach einem der vorangehenden Ansprüche, **dadurch gekennzeichnet, dass** die externen Informationen mittels eines Barcode-Lesegeräts erfasst werden.

7. Verfahren nach einem der vorangehenden Ansprüche, **dadurch gekennzeichnet, dass** die Auslösezeitinformation (6, 7, 12) dadurch abgerufen wird, dass mit dem elektronischen Barcode-Lesegerät ein Barcode eingelesen wird, der vor Beginn der elektronischen Erfassung durch den Digital Pen auf dem Formular angebracht wurde.

8. Verfahren nach einem der Ansprüche 5 - 7, **dadurch gekennzeichnet, dass** die Stoppzeitinformation (9) **dadurch** abgerufen wird, dass mit dem elektronischen Barcode-Lesegerät ein Barcode eingelesen wird, der vor Beginn der elektronischen Erfassung durch den Digital Pen auf dem Formular angebracht wurde.

9. Verfahren nach einem der vorangehenden Ansprüche, **dadurch gekennzeichnet, dass** die externen Informationen eine vorgegebene Feldzuordnungsinformation und eine frei wählbare Inhaltsinformation umfassen und die mit dem Barcode-Lesegerät erfasste Feldzuordnungsinformation eine nachträgliche eindeutige Zuordnung zu einem Formularfeld ermöglicht.
